# EUROPÄISCHE PATENTSCHRIFT

(11) **EP 4 022 179 B1**
(45) Veröffentlichungstag und Bekanntmachung des Hinweises auf die Patenterteilung: **07.08.2024**
(21) Anmeldenummer: 19762344.0
(22) Anmeldetag: 28.08.2019
(51) Int. Cl.: F02D 9/04

(54) **DROSSELKLAPPENVORRICHTUNG FÜR EINEN ABGASSTRANG ODER EINEN ZULUFTSTRANG EINES VERBRENNUNGSMOTORS UND EIN VERFAHREN ZUR HERSTELLUNG EINES DROSSELKLAPPENGEHÄUSES EINER DROSSELKLAPPENVORRICHTUNG**
THROTTLE VALVE DEVICE FOR AN EXHAUST GAS TRACT OR AN AIR INTAKE TRACT OF AN INTERNAL COMBUSTION ENGINE AND A METHOD FOR PRODUCING A THROTTLE VALVE HOUSING OF A THROTTLE VALVE DEVICE
DISPOSITIF PAPILLON DES GAZ POUR UNE LIGNE D'ÉCHAPPEMENT OU UNE LIGNE D'ALIMENTATION EN AIR FRAIS D'UN MOTEUR À COMBUSTION INTERNE ET PROCÉDÉ DE FABRICATION D'UN BOÎTIER DE PAPILLON DES GAZ D'UN DISPOSITIF PAPILLON DES GAZ

(43) Veröffentlichungstag der Anmeldung: 06.07.2022
(73) Patentinhaber: Pierburg GmbH, 41460 Neuss (DE)
(72) Erfinder: GRAUTEN, Andreas, 41460 Neuss (DE); MICHELS, Jürgen, 41460 Neuss (DE); VITT, Stefan, 41460 Neuss (DE); GERARDS, Hans, 41460 Neuss (DE); KAMARYS, Dirk, 41460 Neuss (DE)
(74) Vertreter: terpatent PartGmbB
(86) Internationale Anmeldenummer: PCT/EP2019/072961
(87) Internationale Veröffentlichungsnummer: WO 2021/037356

(56) Entgegenhaltungen:
- EP-A2- 1 772 615
- WO-A1-2007/124851
- WO-A1-2017/216241
- DE-A1- 102011 107 024
- DE-U1- 202011 100 120
- DE-U1- 9 419 537

## Beschreibung

Die Erfindung betrifft eine Drosselklappenvorrichtung für einen Abgasstrang oder einen Zuluftstrang eines Verbrennungsmotors, mit einem Drosselklappengehäuse, welches ein Innengehäuseelement und ein das Innengehäuseelement radial umgebendes Außengehäuseelement aufweist, wobei zwischen dem Außengehäuseelement und dem Innengehäuseelement ein Luftspalt vorgesehen ist, und wobei das Innengehäuseelement einen Strömungskanal radial begrenzt und einen in den Strömungskanal ragenden Klappenanschlag aufweist, einer Drosselklappe, welche schwenkbar im Strömungskanal angeordnet ist.

Drosselklappenvorrichtungen für Verbrennungsmotoren sind aus dem Stand der Technik bekannt und werden in einem Zuluftstrang oder in einem Abgasstrang des Verbrennungsmotors vorgesehen. Die im Zuluftstrang angeordnete Drosselklappenvorrichtung dient beispielsweise zur Einstellung des Kraftstoff-Luft-Verhältnisses im Verbrennungsprozess des Verbrennungsmotors oder zur Einstellung einer Abgasrückführungsrate in den Verbrennungsmotor. Im Abgasstrang dient die Drosselklappenvorrichtung zur Beeinflussung von Schallemissionen und zur Beeinflussung des Staudrucks in dem Abgasstrang, wobei derartige Drosselklappenvorrichtungen auch als Akustikklappen bezeichnet werden.

Eine derartige Drosselklappenvorrichtung offenbart die WO 2017/216241. Die Drosselklappenvorrichtung weist ein mehrteiliges Drosselklappengehäuse auf, welches ein Innengehäuseelement und ein das Innengehäuseelement radial umgebendes Außengehäuseelement aufweist. Das Innengehäuseelement begrenzt einen Strömungskanal, welcher beispielsweise mit den Abgasen des Verbrennungsmotors durchströmt wird. In dem Strömungskanal ist eine Drosselklappe angeordnet, welche an einer Klappenwelle befestigt ist, wobei die Klappenwelle drehbar gelagert ist und mit einem Aktor drehfest verbunden ist. Durch die Betätigung des Aktors kann die Drosselklappe zwischen einer Offenstellung und einer Schließstellung verstellbar werden, wobei die Drosselklappe in ihrer Schließstellung an einem am Innengehäuseelement vorgesehenen und in den Strömungskanal ragenden Klappenanschlag anliegt.

Das Innengehäuseelement und das Außengehäuseelement sind derart ausgeführt, dass zwischen der Außenumfangsfläche des Innengehäuseelements und der Innenumfangsfläche des Außengehäuseelements ein Luftspalt vorliegt, wobei ein derartiger Luftspalt zu einer Luftspaltisolation führt und dadurch eine Wärmeübertragung zwischen dem Strömungskanal und der Außenumgebung reduziert wird. Durch eine derartige Luftspaltisolation werden der Aktor und die am Außengehäuseelement angeordneten Klappenwellenlager vor einer thermischen Überhitzung geschützt.

Nachteilhaft an der in der WO 2017/216241 offenbarten Drosselklappenvorrichtung ist, dass die Herstellung und die Montage des Drosselklappengehäuses aufwendig und kostenintensiv sind, wobei das Innengehäuseelement und das Außengehäuseelement aus einem rohrartigen Halbzeug hergestellt werden und dadurch durch einen aufwendigen Umformvorgang in ihre endgültige Form umgeformt werden. Dabei wird das Innengehäuseelement durch ein Verpressen eines in den Innenraum des Innengehäuseelements eingebrachten elastischen Grundwerkstoffs in seine vordefinierte Form umgeformt, wobei der elastische Grundwerkstoff in das rohrartige Halbzeug eingebracht wird und axial belastet wird. Durch das axiale Verpressen des Grundwerkstoffs weicht dieser radial aus und verformt das Innengehäuseelement in seine vordefinierte Form. Das rohrartige Außengehäuseelement wird nach dem Einsetzen des Innengehäuseelements in das Außengehäuseelement durch eine äußere Krafteinwirkung in seine endgültige Form verformt.

Die DE 10 2011 107 024 A1 und die DE 20 2011 100 120 U1 offenbaren jeweils eine Klappenvorrichtung mit einem Klappengehäuse, wobei das Klappengehäuse einen Strömungskanal begrenzt. In dem Strömungskanal ist eine verstellbare Klappe angeordnet. Das Klappengehäuse weist ein Außengehäuseelement und ein von dem Außengehäuseelement radial umgebendes Außengehäuseelement auf, wobei das Innengehäuseelement und das Außengehäuseelement jeweils aus zwei Halbschalen ausgebildet sind. Ferner offenbart die EP 1 772 615 A2 ebenfalls eine Klappenvorrichtung mit einem Klappengehäuse und einem Klappengehäuse, wobei das Klappengehäuse zwei, axial aneinander angrenzende Gehäuseelement aufweise, welche jeweils aus zwei, halbschalenartigen Elemente gebildet sind.

Es stellt sich daher die Aufgabe, eine Drosselklappenvorrichtung bereitzustellen, welche einfach und kostengünstig hergestellt werden kann.

Diese Aufgabe wird durch eine Drosselklappenvorrichtung mit den Merkmalen des Hauptanspruchs 1 gelöst.

Dadurch, dass das Außengehäuseelement aus zwei Außengehäuse-Halbschalen hergestellt ist und das Innengehäuseelement aus zwei Innengehäuse-Halbschalen hergestellt ist, wird die Herstellung und die Montage des Drosselklappengehäuses vereinfacht und die Herstellungs- und Montagekosten reduziert. Die Herstellungskosten des Drosselklappengehäuses können derart reduziert werden, indem die Innengehäuse-Halbschalen und die Außengehäuse-Halbschalen aus kostengünstig herstellbaren Blechzuschnitten, beispielsweise aus rechteckigen Blechzuschnitten oder direkt von einem Coil, hergestellt werden und diese Blechzuschnitte in einem kostengünstigen Verfahren umgeformt, insbesondere tiefgezogen, werden. Im darauffolgenden Schritt werden die Innengehäuse-Halbschalen zu einem Innengehäuseelement mit einem ringförmigen Querschnitt gefügt. Abschließend werden die umgeformten Außengehäuse-Halbschalen über das gefügte Innengehäuseelement gestülpt und miteinander verbunden.

Der Luftspalt ist ein durch das Innengehäuseelement und das Außengehäuseelement allseitig begrenzter Hohlraum, wodurch ein Einströmen eines heißen oder eines thermisch leitenden Stoffs zuverlässig verhindert wird und eine Luftspaltisolation gewährleistet wird.

Vorzugsweise sind das Innengehäuseelement und das Außengehäuseelement stoffschlüssig miteinander verbunden, wodurch eine zuverlässige und fluiddichte Verbindung zwischen dem Innengehäuseelement und dem Außengehäuseelement hergestellt wird. Durch die stoffschlüssige Verbindung kann eine Leckage des durch den Strömungskanal strömenden Gases in den Luftspalt zuverlässig verhindert werden und dadurch die thermische Isolation sichergestellt werden. Die stoffschlüssige Verbindung ist vorzugsweise eine Schweißverbindung.

In einer bevorzugten Ausgestaltung ist das Innengehäuseelement ausschließlich mit einem in Strömungsrichtung vor der Drosselklappe angeordneten axialen Ende mit dem Außengehäuseelement verschweißt. Dadurch kann die Leckage in den Luftspalt des durch den Strömungskanal strömenden Gases in den Luftspalt zuverlässig verhindert werden, wobei ein Einströmen des Gases an dem in Strömungsrichtung nach der Drosselklappe angeordneten axialen Ende durch die Strömung des Gases verhindert wird. Durch das Verschweißen des Innengehäuseelements mit dem Außengehäuseelement ausschließlich an einem axialen Ende können die Herstellungskosten des Drosselklappengehäuses reduziert werden. Außerdem wird dadurch ein unerwartetes Versagen der Schweißnähte zwischen dem Innengehäuseelement und dem Außengehäuseelement aufgrund unterschiedlicher Wärmedehnungen des Innengehäuseelements und des Außengehäuseelements verhindert.

Vorzugsweise ist der Luftspalt durch eine Labyrinthdichtung vom Strömungskanal abgedichtet. Die Dichtwirkung beruht auf der Verlängerung des Strömungsweges durch den abzudichtenden Spalt, wodurch der Strömungswiderstand wesentlich erhöht wird. Die Wegverlängerung wird durch ein Ineinandergreifen von am Außengehäuseelement und am Innengehäuseelement angeordnete Formelementen erreicht, wobei die Formelemente des Innengehäuseelements und des Außengehäuseelements nicht berühren oder nur geringfügig berühren. Eine derartige Abdichtung kann auf eine einfache und kostengünstige Weise hergestellt werden.

In einer bevorzugten Ausgestaltung weist das Außengehäuseelement zur Aufnahme eines Klappenlagers mindestens eine Lageraufnahmebuchse in einer am Außengehäuseelement vorgesehenen Öffnung auf, wobei die Labyrinthdichtung durch eine an der Lageraufnahmebuchse vorgesehene Aussparung und einen an der Außenumfangsfläche des Innengehäuseelements vorgesehenen und in die Aussparung eingreifenden Vorsprung ausgeführt ist. Dadurch, dass die Labyrinthdichtung zwischen der quer zur Längsachse des Strömungskanals montierten Lageraufnahmebuchse und dem quer zur Längsachse des Strömungskanals ausgerichteten Vorsprung am Innengehäuseelement ausgeführt ist, kann die Labyrinthdichtung einfach durch das Einsetzen der Lageraufnahmebuchse in die dafür vorgesehene Öffnung hergestellt werden, so dass kein separater Montageschritt zur Herstellung der Labyrinthdichtung erforderlich ist.

Vorzugsweise sind die Innengehäuse-Halbschalen und/oder die Außengehäuse-Halbschalen miteinander verschweißt, wodurch eine zuverlässige und fluiddichte Verbindung zwischen den Halbschalen hergestellt werden kann.

In einer vorteilhaften Ausgestaltung ist eine Verbindungsebene der Innengehäuse-Halbschalen um 90° verdreht zur Verbindungsebene der Außengehäuse-Halbschalen ausgerichtet. Vorzugsweise ist die Verbindungsebene der Innengehäuse-Halbschalen längs zu einer Drehachse der Drosselklappe und längs zu einer Längsachse des Strömungskanals ausgerichtet und die Verbindungsebene der Außengehäuse-Halbschalen ist quer zur Drehachse der Drosselklappe ausgerichtet. Dadurch kann die Lebensdauer der Drosselklappenvorrichtung erhöht werden, indem sich die Schweißnähte des Innengehäuseelements und des Außengehäuseelements und der durch die Schweißnähte gegebenenfalls geschwächten Bereiche des Innengehäuseelements und des Außengehäuseelement, insbesondere durch eine Gefügeumwandlung aufgrund des Temperatureintrags beim Schweißen, nicht in einer gemeinsamen Ebene überlagern.

Vorzugsweise weist das Innengehäuseelement eine geringere Wandstärke als das Außengehäuseelement auf, wodurch sich das Innengehäuseelement mit relativ wenig Wärmeeintrag auf die Temperatur des durch den Strömungskanal strömenden Abgases aufheizt und damit die durch das Abgas transportierte Wärme nahezu vollständig zum Aufheizen einer in Strömungsrichtung nach der Drosselklappenvorrichtung angeordneten Abgasnachbehandlungskomponente genutzt werden kann. Eine schnellstmögliche Aufheizung der Abgasnachbehandlungskomponente ist insbesondere in einer sogenannten Kaltstartphase eines Verbrennungsmotors erforderlich, da diese erst ab einer sogenannten Light-off-Temperatur aktiv ist und erst ab der Light-off-Temperatur die im Abgas enthaltenen Schadstoff in ungiftige Stoffe konvertiert.

Vorzugsweise weist die Außenumfangsfläche des Innengehäuseelements und der Innenumfangsfläche des Außengehäuseelement einen mittleren Durchmesser auf, wobei der Innenumfangsfläche des Außengehäuseelements im Bereich des Luftspalts größer als der mittlere Durchmesser ausgeführt ist. Auf diese Weise wird der Luftspalt einfach und kostengünstig bereitgestellt.

Vorzugsweise sind das Innengehäuseelement und das Außengehäuseelement aus jeweils einem Blech hergestellt, wobei der Klappenanschlag am Innengehäuseelement durch Umformen hergestellt ist. Der Klappenanschlag wird im Umformverfahren der Halbschalen miteingeformt. Dadurch können die Herstellungskosten des Drosselklappengehäuses und damit der Drosselklappenvorrichtung reduziert werden.

Die Aufgabe wird außerdem durch ein Verfahren zur Herstellung eines Drosselklappengehäuses einer Drosselklappenvorrichtung nach Anspruch 1 bis 11 mit den Merkmalen des Anspruchs 12 gelöst.

Dabei werden zunächst zwei Innengehäuse-Halbschalen bereitgestellt und miteinander zum Innengehäuseelement verbunden. Anschließend werden zwei Außengehäuse-Halbschalen bereitgestellt und miteinander zu einem Außengehäuseelement verbunden, wobei die beiden Außengehäuse-Halbschalen über das Innengehäuseelement gestülpt werden und anschließend miteinander verbunden werden.

Durch das Verfahren werden, wie bereits zum Hauptanspruch 1 ausgeführt, die Herstellung und die Montage des Drosselklappengehäuses vereinfacht und dadurch die Herstellungs- und Montagekosten reduziert.

Es wird somit eine Drosselklappenvorrichtung für einen Abgasstrang oder einen Zuluftstrang eines Verbrennungsmotors geschaffen, welche einfach und kostengünstig hergestellt werden kann. Desweiteren wird ein Verfahren zur Herstellung eines Drosselklappengehäuses einer Drosselklappenvorrichtung bereitgestellt, durch welches das Drosselklappengehäuse einfach und kostengünstig hergestellt werden kann.

Ein Ausführungsbeispiel einer erfindungsgemäßen Drosselklappenvorrichtung für einen Abgasstrang oder einen Zuluftstrang eines Verbrennungsmotors wird in den Figuren dargestellt und nachfolgend beschrieben.
Figur 1 zeigt eine perspektivische Ansicht einer erfindungsgemäßen Drosselklappenvorrichtung,
Figur 2 zeigt eine Querschnittansicht eines Drosselklappengehäuses der Drosselklappenvorrichtung aus Figur 1,
Figur 3 zeigt eine Längsschnittansicht eines Drosselklappengehäuses der Drosselklappenvorrichtung aus Figur 1, und
Figur 4 zeigt eine Explosionsdarstellung des Drosselklappengehäuses der Drosselklappenvorrichtung aus Figur 1.

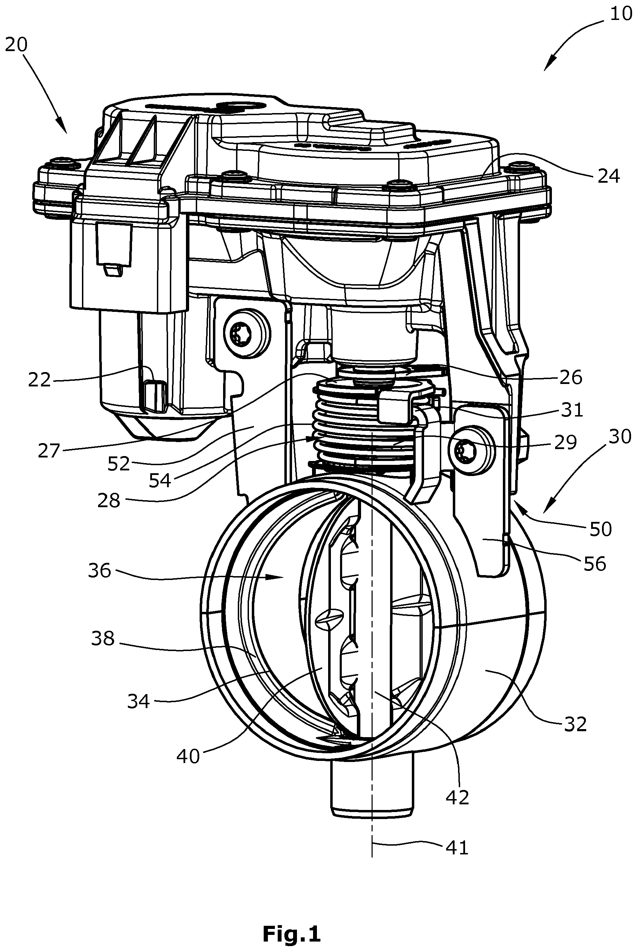

Die Figur 1 zeigt eine Drosselklappenvorrichtung 10 für einen Abgasstrang eines Verbrennungsmotors, wobei die Drosselklappenvorrichtung 10 ein Stellergehäuse 20 und ein Drosselklappengehäuse 30 umfasst. Das Stellergehäuse 20 ist mehrteilig ausgeführt und weist einen Gehäusegrundkörper 22 und einen mit dem Gehäusegrundkörper 22 verschraubten Deckel 24 auf, wobei der Gehäusegrundkörper 22 aus einem metallischen Werkstoff hergestellt ist und der Deckel 24 aus einem Kunststoff hergestellt ist. In dem Stellergehäuse 20 ist eine in den Figuren nicht gezeigte Antriebsvorrichtung mit einer dazugehörigen Leistungselektronik angeordnet, wobei die Antriebsvorrichtung eine aus dem Stellergehäuse 20 ragende Stellerwelle 26 antreibt.

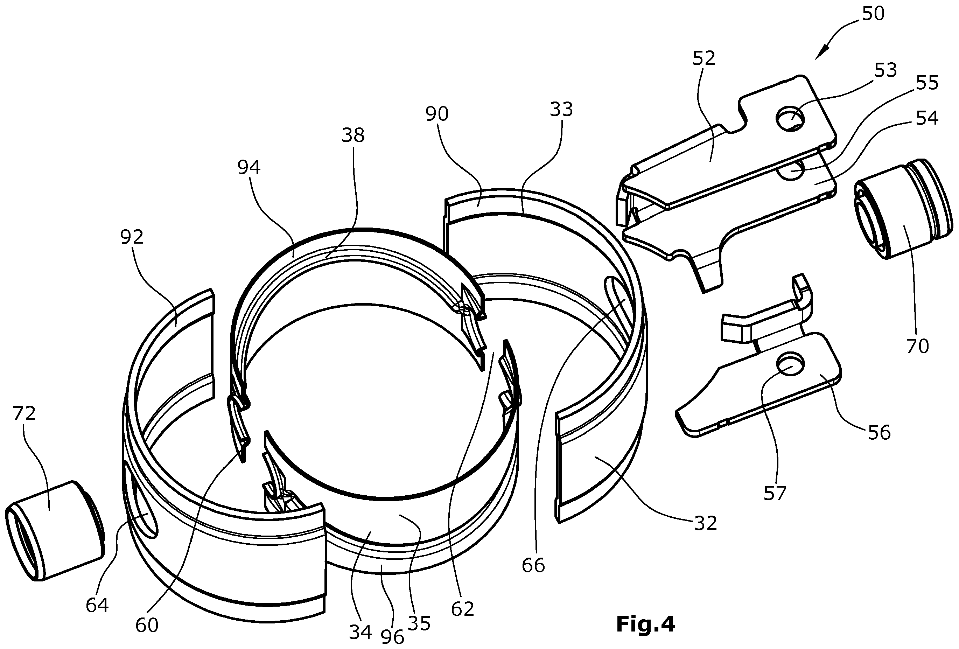

Das Drosselklappengehäuse 30 ist über eine Haltevorrichtung 50 am Gehäusegrundkörper 22 des Stellergehäuses 20 befestigt, wobei die Haltevorrichtung 50 mehrere Halteschenkel 52, 54, 56 aufweist, welche am Drosselklappengehäuse 30 fest angeordnet, beispielsweise angeschweißt, sind. Die Halteschenkel 52, 54, 56 sind in Figur 4 gezeigt. Die Halteschenkel 52, 54, 56 weisen an ihrem dem Drosselklappengehäuse 30 abgewandten Ende jeweils eine Schraubenöffnung 53, 55, 57 auf, durch welche jeweils eine Schraube durchgesteckt wird und in den Gehäusegrundkörper 22 eingeschraubt wird.

In dem Drosselklappengehäuse 30 ist eine Drosselklappe 40 angeordnet, welche an einer um eine Drehachse 41 drehbar gelagerten Klappenwelle 42 befestigt ist. Die Klappenwelle 42 ist mit einem aus dem Drosselklappengehäuse 30 herausragenden Ende über eine Kupplung 28 mit dem aus dem Stellergehäuse 20 herausragenden Ende der Stellerwelle 26 drehfest verbunden.

Die Kupplung 28 ist von einer Feder 29, insbesondere einer Schenkelfeder, radial umgeben, wobei die Feder 29 mit einem ersten Schenkel mit dem Drosselklappengehäuse 30 und mit einem entgegengesetzten, zweiten Schenkel mit der Klappenwelle 42 fest verbunden ist. Die Verbindung der Feder 29 mit der Klappenwelle 42 erfolgt über ein plattenartiges und mit der Klappenwelle 42 drehfest verbundenes Übertragungselement 27.

Im eingebauten Zustand belastet die Feder 29 die Klappenwelle 42 in Umfangsrichtung derart, dass die Drosselklappe 40 bei einer inaktiven Antriebsvorrichtung in eine Fail-Safe-Position verdreht wird, wobei in der Fail-Safe-Position das Übertragungselement 27 an einem am Halteschenkel 56 und damit am Drosselklappengehäuse 30 vorgesehenen Anschlag 31 anliegt.

Desweiteren wird die Feder 29 beim Montagevorgang axial gestaucht, wodurch die Feder 29 die Klappenwelle 42 axial belastet. Die Federkraft wirkt dabei in Richtung des Drosselklappengehäuses 30.

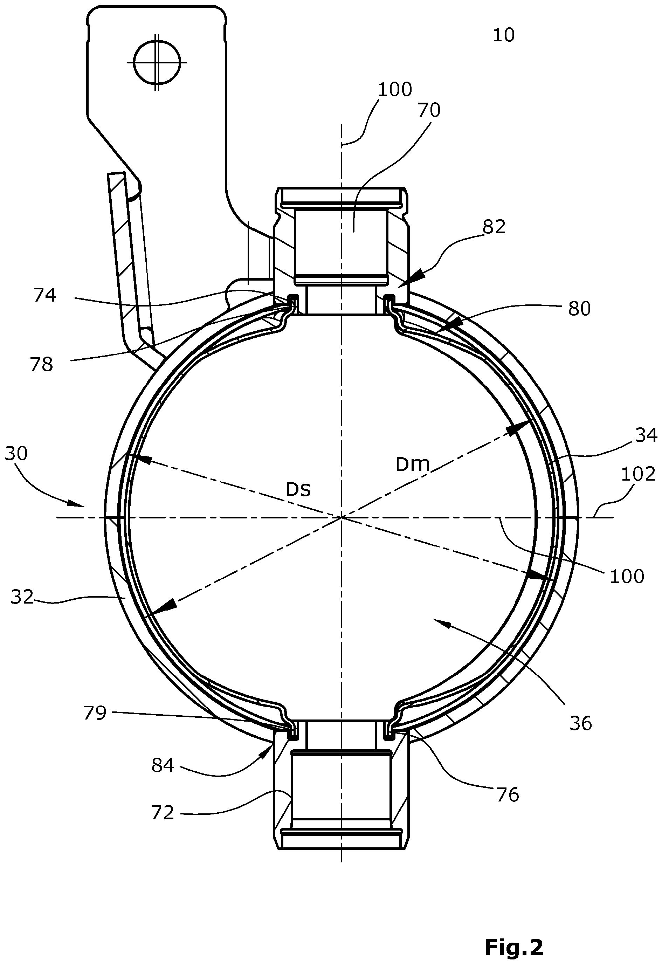

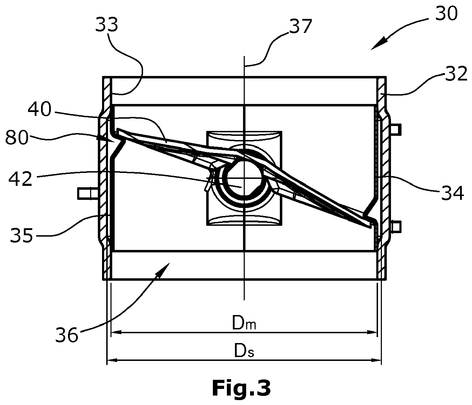

Die Figuren 2, 3 und 4 zeigen das Drosselklappengehäuse 30 in unterschiedlichen Ansichten. Das Drosselklappengehäuse 30 ist doppelwandig ausgeführt und umfasst ein Außengehäuseelement 32 und ein Innengehäuseelement 34.

Das Innengehäuseelement 34 begrenzt radial einen Strömungskanal 36 und weist einen Klappenanschlag 38 auf, wobei die in dem Strömungskanal 36 angeordnete Drosselklappe 40 in ihre Schließstellung am Klappenanschlag 38 anliegt und den Strömungskanal 36 verschließt. Bei einer inaktiven Antriebsvorrichtung wird die Drosselklappe 40 durch die in Umfangsrichtung wirkenden Belastung der Feder 29 in ihre Offenstellung verstellt.

Das Außengehäuseelement 32 liegt im endmontierten Zustand mit seiner Innenumfangsfläche 33 an der Außenumfangsfläche 35 des Innengehäuseelements 34 an, wobei die Innenumfangsfläche 33 und die Außenumfangsfläche 35 im Anlagebereich einen mittleren Durchmesser Dm aufweisen. Im axial mittleren Bereich des Drosselklappengehäuses 30 weist die Innenumfangsfläche 33 des Außengehäuseelements 32 einen im Vergleich zum mittleren Durchmesser Dm größeren Durchmesser Ds auf. Durch den vergrößerten Durchmesser Ds entsteht ein umlaufender und allseitig durch das Außengehäuseelement 32 und das Innengehäuseelement 34 begrenzter Luftspalt 80. Der Luftspalt 80 dient der thermischen Isolation zwischen dem Strömungskanal 36 und der Außenumgebung und somit zwischen dem Strömungskanal 36 und dem Stellergehäuse 20.

Das Innengehäuseelement 34 und das Außengehäuseelement 32 weisen jeweils zwei, sich gegenüberliegende Öffnungen 60, 62, 64, 66 auf, wobei sich die am Innengehäuseelement 34 vorgesehenen Öffnungen 60, 62 und die am Außengehäuseelement 32 vorgesehenen Öffnungen 64, 66 überlagern und sich die Klappenwelle 42 durch die Öffnungen 60, 62, 64, 66 erstreckt. In den Öffnungen 64, 66 des Außengehäuseelements 32 ist jeweils eine Lageraufnahmebuchse 70, 72 angeordnet, wobei in den Lageraufnahmebuchsen 70, 72 jeweils ein in den Figuren nicht gezeigtes Klappenwellen-Lager und eine Abdichtfläche vorgesehen sind. Durch die axiale Vorspannung der Klappenwelle 42 durch die Feder 29 wird die Abdichtfläche gegen eine Gegendichtflächen gedrückt. Das Klappenwellen-Lager ist als Gleitlager, beispielsweise als Gleitlagerhülse, ausgeführt. Alternativ kann das Klappenwellenlager als Wälzlager ausgebildet sein. Hierbei kann die axiale Vorspannung der Klappenwelle zur axialen Vorspannung der Wälzlager genutzt werden.

Die Lageraufnahmebuchsen 70, 72 weisen an ihren dem Strömungskanal 36 zugewandten Stirnseite jeweils eine ringartige Aussparung 74, 76 auf, wobei in die ringartige Aussparungen 74, 76 jeweils ein dazu korrespondierender, ringartiger Vorsprung 78, 79 eingreift. Die ringartigen Vorsprünge 78,79 sind an der Außenumfangsfläche 35 des Innengehäuseelements 34 angeordnet und umgeben die Öffnungen 64, 66 radial. Die Aussparungen 74, 76 und die Vorsprünge 78, 79 bilden gemeinsam jeweils eine Labyrinthdichtung 82, 84, durch welche der Luftspalt 80 vom Strömungskanal 36 abgedichtet wird.

Erfindungsgemäß ist das Außengehäuseelement 32 aus zwei Außengehäuse-Halbschalen 90, 92 hergestellt und das Innengehäuseelement 34 ist aus zwei Innengehäuse-Halbschalen 94, 96 hergestellt.

Die Außengehäuse-Halbschalen 90, 92 werden aus einem rechteckigen Blechausschnitt hergestellt und um durch ein Tiefziehverfahren in die jeweilige vordefinierte Form umgeformt, so dass die Außengehäuse-Halbschalen 90, 92 im montierten Zustand unter anderem ein Außengehäuseelement mit einem ringartigen Querschnitt bilden. In gleicher Weise werden auch die Innengehäuse-Halbschalen 94, 96 hergestellt.

Im Montageprozess des Drosselklappengehäuse 30 werden zunächst die Innengehäuse-Halbschalen 94, 96 in einer längs zur Drehachse 41 der Klappenwelle 42 und längs zu einer Längsachse 37 des Strömungskanals 36 ausgerichteten Verbindungsebene 100 verschweißt. Im nächsten Schritt werden die Außengehäuse-Halbschalen 90, 92 über das bereits verschweißte Innengehäuseelement 34 gestülpt und in einer quer zur Drehachse der Klappenwelle 42 ausgerichteten Verbindungsebene 102 miteinander verschweißt. Anschließend wird das Innengehäuseelement 34 mit einem in Strömungsrichtung vor der Drosselklappe 40 angeordneten axialen Ende mit dem Außengehäuseelement 32 verschweißt, wodurch ein Einströmen des Abgases in den Luftspalt 80 verhindert wird.

In darauffolgenden Montageschritten werden die Lageraufnahmebuchsen 70, 72 in die entsprechenden Öffnungen 64, 66 eingesetzt und mit dem Außengehäuseelement 32 verschweißt. Desweiteren werden die Halteschenkel 52, 54, 56 an die Außenumfangsfläche des Außengehäuseelements 32 angeschweißt.

Es wird somit eine Drosselklappenvorrichtung 10 mit einem Drosselklappengehäuse 30 geschaffen, welches einfach und kostengünstig hergestellt und montiert werden kann. Desweiteren wird ein kostengünstiges Verfahren zur Herstellung des Drosselklappengehäuses 30 der Drosselklappenvorrichtung 10 bereitgestellt.

Es sollte deutlich sein, dass der Schutzbereich nicht auf das beschriebene Ausführungsbeispiel beschränkt ist, sondern verschiedene Modifikationen, wie in den beigefügten Ansprüchen definiert, denkbar sind. So kann beispielsweise das Innen- und das Außengehäuseelement 32, 34 oder die Drosselklappe 40 anders ausgeführt sein.

## Patentansprüche

1. Drosselklappenvorrichtung für einen Abgasstrang oder einen Zuluftstrang eines Verbrennungsmotors, mit
einem Drosselklappengehäuse (30), welches ein Innengehäuseelement (34) und ein das Innengehäuseelement (34) radial umgebendes Außengehäuseelement (32) aufweist, wobei zwischen dem Außengehäuseelement (32) und dem Innengehäuseelement (34) ein Luftspalt (80) vorgesehen ist, und wobei das Innengehäuseelement (34) einen Strömungskanal (36) radial begrenzt und einen in den Strömungskanal (36) ragenden Klappenanschlag (38) aufweist,
einer Drosselklappe (40), welche schwenkbar im Strömungskanal (36) angeordnet ist,
wobei das Außengehäuseelement (32) aus zwei Außengehäuse-Halbschalen (90, 92) hergestellt ist und das Innengehäuseelement (34) aus zwei Innengehäuse-Halbschalen (94,96) hergestellt ist, **dadurch gekennzeichnet, dass** der Luftspalt (80) ein durch das Innengehäuseelement (34) und das Außengehäuseelement (32) allseitig begrenzter Hohlraum ist.

2. Drosselklappenvorrichtung nach Anspruch 1,
**dadurch gekennzeichnet, dass**
das Innengehäuseelement (34) und das Außengehäuseelement (32) stoffschlüssig miteinander verbunden sind.

3. Drosselklappenvorrichtung nach Anspruch 2,
**dadurch gekennzeichnet, dass**
das Innengehäuseelement (34) ausschließlich mit einem in Strömungsrichtung vor der Drosselklappe (40) angeordneten axialen Ende mit dem Außengehäuseelement (32) verschweißt ist.

4. Drosselklappenvorrichtung nach einem der vorhergehenden Ansprüche,
**dadurch gekennzeichnet, dass**
der Luftspalt (80) durch eine Labyrinthdichtung (82, 84) vom Strömungskanal (36) abgedichtet ist.

5. Drosselklappenvorrichtung nach Anspruch 4,
**dadurch gekennzeichnet, dass**
das Außengehäuseelement (32) mindestens eine Lageraufnahmebuchse (70, 72) zur Aufnahme eines Klappenlagers aufweist, wobei die Labyrinthdichtung (82, 84) durch eine an der Lageraufnahmebuchse (70, 72) vorgesehene Aussparung (74, 76) und einen an der Außenumfangsfläche (32) des Innengehäuseelements (34) vorgesehenen und in die Aussparung (74, 76) eingreifenden Vorsprung (78, 79) ausgeführt ist.

6. Drosselklappenvorrichtung nach einem der vorhergehenden Ansprüche,
**dadurch gekennzeichnet, dass**
die Innengehäuse-Halbschalen (94, 96) und/oder die Außengehäuse-Halbschalen (90, 92) miteinander verschweißt sind.

7. Drosselklappenvorrichtung nach einem der vorhergehenden Ansprüche,
**dadurch gekennzeichnet, dass**
eine Verbindungsebene (102) der Innengehäuse-Halbschalen (94, 96) um 90° verdreht zur Verbindungsebene (100) der Außengehäuse-Halbschalen (90, 92) ausgerichtet ist.

8. Drosselklappenvorrichtung nach Anspruch 7,
**dadurch gekennzeichnet, dass**
die Verbindungsebene (102) der Innengehäuse-Halbschalen (94, 96) längs zu einer Drehachse (41) der Drosselklappe (40) und längs zu einer Längsachse (37) des Strömungskanals (36) ausgerichtet ist und die Verbindungsebene (100) der Außengehäuse-Halbschalen (90, 92) quer zur Drehachse der Drosselklappe (40) ausgerichtet ist.

9. Drosselklappenvorrichtung nach einem der vorhergehenden Ansprüche,
**dadurch gekennzeichnet, dass**
das Innengehäuseelement (34) eine geringere Wandstärke als das Außengehäuseelement (32) aufweist.

10. Drosselklappenvorrichtung nach einem der vorhergehenden Ansprüche,
**dadurch gekennzeichnet, dass**
die Außenumfangsfläche des Innengehäuseelements (34) und die Innenumfangsfläche des Außengehäuseelements (32) einen mittleren Durchmesser (Dm) aufweisen, wobei der Innendurchmesser des Außengehäuseelements (32) im Bereich des Luftspalts (80) größer als der mittlere Durchmesser (Dm) ist.

11. Drosselklappenvorrichtung nach einem der vorhergehenden Ansprüche,
**dadurch gekennzeichnet, dass**
das Innengehäuseelement (34) und das Außengehäuseelement (32) aus jeweils einem Blech hergestellt sind, wobei der Klappenanschlag (38) am Innengehäuseelement (34) durch Umformen hergestellt ist.

12. Verfahren zur Herstellung eines Drosselklappengehäuses einer Drosselklappenvorrichtung nach einem der Ansprüche 1 bis 11, mit den folgen Schritten:
Bereitstellen von zwei Innengehäuse-Halbschalen (94, 96) und Verbindung der Innengehäuse-Halbschalen (94, 96) zum Innengehäuseelement (34),
Bereitstellen von zwei Außengehäuse-Halbschalen (90, 92) und Verbinden der Außengehäuse-Halbschalen (90, 92) zu einem Außengehäuseelement (32), wobei die beiden Außengehäuse-Halbschalen (90, 92) über das montierte Innengehäuseelement (34) gestülpt werden und anschließend miteinander verbunden werden.

## Claims

1. Throttle flap device for an exhaust gas line or an air supply line of an internal combustion engine, comprising
a throttle flap housing (30), which comprises an inner housing element (34) and an outer housing element (32) radially surrounding the inner housing element (34), wherein an air gap (80) is provided between the outer housing element (32) and the inner housing element (34), and wherein the inner housing element (34) radially defines a flow channel (36) and comprises a flap stop (38) projecting into the flow channel (36),
a throttle flap (40), which is pivotably arranged in the flow channel (36), wherein the outer housing element (32) is made of two outer housing half-shells (90, 92) and the inner housing element (34) is made of two inner housing half-shells (94, 96),
**characterised in that**
the air gap (80) is a cavity which is defined on all sides by the inner housing element (34) and the outer housing element (32).

2. Throttle flap device according to claim 1,
**characterised in that**
the inner housing element (34) and the outer housing element (32) are connected to one another by a material bond.

3. Throttle flap device according to claim 2,
**characterised in that**
the inner housing element (34) is welded to the outer housing element (32) exclusively at one axial end arranged upstream of the throttle flap (40) in the direction of flow.

4. Throttle flap device according to one of the preceding claims,
**characterised in that**
the air gap (80) is sealed from the flow channel (36) by a labyrinth seal (82, 84).

5. Throttle flap device according to claim 4,
**characterised in that**
the outer housing element (32) comprises at least one bearing receiving bushing (70, 72) for holding a flap bearing, wherein the labyrinth seal (82, 84) is configured by a recess (74, 76) provided on the bearing receiving bushing (70, 72) and a protrusion (78, 79) provided on the outer circumferential surface (32) of the inner housing element (34) and interacting with the recess (74, 76).

6. Throttle flap device according to one of the preceding claims,
**characterised in that**
the inner housing half-shells (94, 96) and/or the outer housing half-shells (90, 92) are welded together.

7. Throttle flap device according to one of the preceding claims,
**characterised in that**
a connecting plane (102) of the inner housing half-shells (94, 96) is orientated rotated by 90° relative to the connecting plane (100) of the outer housing half-shells (90, 92).

8. Throttle flap device according to claim 7,
**characterised in that**
the connecting plane (102) of the inner housing half-shells (94, 96) is aligned longitudinally to a rotational axis (41) of the throttle flap (40) and longitudinally to a longitudinal axis (37) of the flow channel (36) and the connecting plane (100) of the outer housing half-shells (90, 92) is aligned transversely to the rotational axis of the throttle flap (40).

9. Throttle flap device according to one of the preceding claims,
**characterised in that**
the inner housing element (34) comprises a thinner wall thickness than the outer housing element (32).

10. Throttle flap device according to one of the preceding claims,
**characterised in that**
the outer circumferential surface of the inner housing element (34) and the inner circumferential surface of the outer housing element (32) comprise an average diameter (Dm), wherein the inner diameter of the outer housing element (32) in the region of the air gap (80) is greater than the average diameter (Dm).

11. Throttle flap device according to one of the preceding claims,
**characterised in that**
the inner housing element (34) and the outer housing element (32) are each made from a sheet metal, wherein the flap stop (38) on the inner housing element (34) is produced by forming.

12. A method of manufacturing a throttle housing of a throttle flap device according to any one of claims 1 to 11, comprising the following steps:
Providing two inner housing half-shells (94, 96) and connecting the inner housing half-shells (94, 96) to the inner housing element (34), providing two outer housing half-shells (90, 92) and connecting the outer housing half-shells (90, 92) to form an outer housing element (32), wherein the two outer housing half-shells (90, 92) are slipped over the assembled inner housing element (34) and are then connected to one another.

## Revendications

1. Dispositif de clapet de régulation pour une conduite de gaz d'échappement ou une conduite d'air entrant d'un moteur à combustion interne, avec
un boîtier de clapet de régulation (30), qui comprend un élément de boîtier intérieur (34) et un élément de boîtier extérieur (32) entourant radialement l'élément de boîtier intérieur (34), une fente d'air (80) étant prévue entre l'élément de boîtier extérieur (32) et l'élément de boîtier intérieur (34), et l'élément de boîtier intérieur (34) délimitant radialement un canal d'écoulement (36) et comprenant une butée de clapet (38) faisant saillie dans le canal d'écoulement (36),
un clapet de régulation (40) qui est disposé de manière pivotante dans le canal d'écoulement (36),
où
l'élément de boîtier extérieur (32) est fabriqué en deux demi-coques de boîtier extérieur (90, 92) et l'élément de boîtier intérieur (34) est fabriqué en deux demi-coques de boîtier intérieur (94, 96), **caractérisé en ce que** la fente d'air (80) est un espace creux délimité de tous côtés par l'élément de boîtier intérieur (34) et l'élément de boîtier extérieur (32).

2. Dispositif de clapet de régulation selon la revendication 1,
**caractérisé en ce que**
l'élément de boîtier intérieur (34) et l'élément de boîtier extérieur (32) sont reliés entre eux par une liaison de matière.

3. Dispositif de clapet de régulation selon la revendication 2,
**caractérisé en ce que**
l'élément de boîtier intérieur (34) est soudé à l'élément de boîtier extérieur (32) exclusivement par une extrémité axiale disposée en amont du clapet de régulation (40) dans le sens de l'écoulement.

4. Dispositif de clapet de régulation selon l'une des revendications précédentes,
**caractérisé en ce que**
la fente d'air (80) est isolée du canal d'écoulement (36) par un joint labyrinthe (82, 84).

5. Dispositif de clapet de régulation selon la revendication 4,
**caractérisé en ce que**
l'élément de corps extérieur (32) comprend au moins un coussinet de réception de palier (70, 72) destiné à recevoir un palier de clapet, le joint labyrinthe (82, 84) étant réalisé par une projection (74, 76) prévue sur le coussinet de réception de palier (70, 72) et une projection (78, 79) prévue sur la surface périphérique extérieure (32) de l'élément de boîtier intérieur (34) et s'engageant dans la projection (74, 76).

6. Dispositif de clapet de régulation selon l'une quelconque des revendications précédentes,
**caractérisé en ce que**
les demi-coquilles du boîtier intérieur (94, 96) et/ou les demi-coquilles du boîtier extérieur (90, 92) sont soudées entre elles.

7. Dispositif de clapet de régulation selon l'une quelconque des revendications précédentes,
**caractérisé en ce que**
un plan de jonction (102) des demi-coquilles (94, 96) du boîtier intérieur est orienté avec une rotation de 90° par rapport au plan de jonction (100) des demi-coquilles (90, 92) du boîtier extérieur.

8. Dispositif de clapet de régulation selon la revendication 7,
**caractérisé en ce que**
le plan de jonction (102) des demi-coquilles (94, 96) du boîtier intérieur est orienté longitudinalement par rapport à un axe de rotation (41) du clapet de régulation (40) et longitudinalement par rapport à un axe longitudinal (37) du canal d'écoulement (36) et le plan de jonction (100) des demi-coquilles (90, 92) du boîtier extérieur est orienté transversalement par rapport à l'axe de rotation du clapet de régulation (40).

9. Dispositif de clapet de régulation selon l'une quelconque des revendications précédentes,
**caractérisé en ce que**
l'élément de boîtier intérieur (34) comprend une épaisseur de paroi inférieure à celle de l'élément de boîtier extérieur (32).

10. Dispositif de clapet de régulation selon l'une des revendications précédentes,
**caractérisé en ce que**
la surface périphérique extérieure de l'élément de boîtier intérieur (34) et la surface périphérique intérieure de l'élément de boîtier extérieur (32) comprennent un diamètre moyen (Dm), le diamètre intérieur de l'élément de boîtier extérieur (32) au niveau de la fente d'air (80) étant supérieur au diamètre moyen (Dm).

11. Dispositif de clapet de régulation selon l'une des revendications précédentes,
**caractérisé en ce que**
l'élément de boîtier intérieur (34) et l'élément de boîtier extérieur (32) sont chacun réalisés en tôle, la butée de clapet (38) sur l'élément de boîtier intérieur (34) étant réalisée par formage.

12. Méthode de fabrication d'un boîtier de clapet de régulation d'un dispositif de clapet de régulation selon l'une des revendications 1 à 11, comprenant les étapes suivantes :
Fournir deux demi-coquilles de boîtier intérieur (94, 96) et assembler les demi-coquilles de boîtier intérieur (94, 96) à l'élément de boîtier intérieur (34),
fournir deux demi-coques de boîtier extérieur (90, 92) et ajouter les demi-coques de boîtier extérieur (90, 92) à un élément de boîtier extérieur (32), les deux demi-coques de boîtier extérieur (90, 92) étant enfilées sur l'élément de boîtier intérieur assemblé (34) et étant ensuite ajoutées l'une à l'autre.
